# EUROPEAN PATENT APPLICATION

(11) **EP 4 772 462 A1**
(43) Date of publication of application: **08.07.2026**
(21) Application number: 24755966.9
(22) Date of filing: 30.01.2024
(51) Int. Cl.: B65G 61/00, H01M 8/2404

(54) **HIGH-SPEED STACKING DEVICE FOR ASSEMBLING FLAT COMPONENTS OF ELECTRICAL DEVICE**

(30) Priority: 15.02.2023 CN 202310121473
(71) Applicant: Comau (Shanghai) Engineering Co., Ltd., Shanghai 201913 (CN)
(72) Inventor: ZHANG, Bin, Shanghai 201913 (CN)
(74) Representative: Buzzi, Notaro & Antonielli d'Oulx S.p.A.
(86) International application number: PCT/CN2024/074670
(87) International publication number: WO 2024/169592

(57) **Abstract**

The present invention discloses a stacking device for assembling flat parts of an electrical device, characterized by including a gantry four-built-up shaft carrying mechanism, and further including a membrane electrode plate centering table, a bipolar plate centering table, a membrane electrode plate feeding bin, a membrane electrode plate feeding lifting mechanism, a bipolar plate feeding bin, a bipolar plate feeding lifting mechanism, and a stacked sheet lifting mechanism which are horizontally arranged below a gantry. When the device provided by the present invention is adopted for stacking, incoming products first pass through product centering mechanisms to achieve accurate feeding positions, and then are carried to a stacking position to ensure the feeding accuracy. The gantry four-built-up shaft carrying mechanism above the device provided by the present invention cooperates with the feeding lifting mechanisms and the stacked sheet lifting mechanism below the device to work up and down to ensure the stacking speed. The present invention is able to meet the requirement of accurate and fast crossed stacking of membrane electrode plates and bipolar plates in the production process of automobile hydrogen energy fuel cells.

## Description

### Technical Field

The present invention relates to a stacking device for assembling stacks of flat sheet-like pieces of an electrical device, such as plates or gaskets of fuel cells or electrolytic baths, or battery cells.

### Background

The core of fuel cell production is the alternate stacking of bipolar plates and membrane electrode plates. Both the bipolar plates and the membrane electrode plates are soft sheet products similar to paper. Since the bipolar plates and the membrane electrode plates may have small or even large deviations, they may be prone to deviations relative to the proper position of each plate within the stack. If the stack deviation is too large, risks such as hydrogen leakage and product scrap are easily caused. Therefore, a device needs to have an accurate stacking function. The device has to stack thousands of bipolar plates and membrane electrode plates, so the device should have a high stacking speed. In addition, fuel cell manufacturers often require a device to be compatible with hydrogen fuel cell products of various heights, so the device further needs to have a certain degree of flexible compatibility. How to ensure the stacking accuracy, speed efficiency and flexibility compatibility of the device has become a technical difficulty.

### Summary

An objective of the present invention is to provide a stacking device, which can complete stacking of bipolar plates and membrane electrode plates of hydrogen fuel cells at a very high production speed.

Another objective of the present invention is to provide a stacking device which is flexible and compatible with various heights of products.

In order to achieve at least one of the above objectives, a technical solution of the present invention is to provide a high-speed stacking device for assembling flat parts of an electrical device, including a gantry four-built-up shaft carrying mechanism, wherein the gantry four-built-up shaft carrying mechanism includes a gantry and four built-up shafts arranged on the gantry, which are defined as a first built-up shaft, a second built-up shaft, a third built-up shaft and a fourth built-up shaft respectively;
further including a membrane electrode plate centering table, a bipolar plate centering table, a membrane electrode plate feeding bin, a membrane electrode plate feeding lifting mechanism, a bipolar plate feeding bin, a bipolar plate feeding lifting mechanism, and a stacked sheet lifting mechanism which are horizontally arranged below the gantry, wherein the membrane electrode plate centering table, the membrane electrode plate feeding bin, and the membrane electrode plate feeding lifting mechanism are arranged symmetrically with the bipolar plate centering table, the bipolar plate feeding bin, and the bipolar plate feeding lifting mechanism on left and right sides of the stacked sheet lifting mechanism;
a tray with a fuel cell housing is conveyed by an automatic roller way to the stacked sheet lifting mechanism, a floating end plate in the fuel cell housing is lifted by the stacked sheet lifting mechanism to a stacking position, and heights of a membrane electrode plate and a bipolar plate stacked at the stacking position are maintained constant;
the membrane electrode plate and the bipolar plate are manually fed into the membrane electrode plate feeding bin and the bipolar plate feeding bin, the membrane electrode plate feeding lifting mechanism and the bipolar plate feeding lifting mechanism lift the membrane electrode plate in the membrane electrode plate feeding bin and the bipolar plate in the bipolar plate feeding bin to feeding positions respectively, and heights of the membrane electrode plate and the bipolar plate stacked at the feeding positions are maintained constant; and
the four built-up shafts of the gantry four-built-up shaft carrying mechanism perform left-right crossed division work: the first built-up shaft takes the membrane electrode plate from the feeding position and discharges the membrane electrode plate on the membrane electrode plate centering table, and after the membrane electrode plate is adjusted to a standard position by the membrane electrode plate centering table, the second built-up shaft takes the membrane electrode plate from the membrane electrode plate centering table and discharges the membrane electrode plate on the middle stacking position; and the fourth built-up shaft takes the bipolar plate from the feeding position and discharges the bipolar plate on the bipolar plate centering table, and after the bipolar plate is adjusted to a standard position by the bipolar plate centering table, the third built-up shaft takes the bipolar plate from the bipolar plate centering table and discharges the bipolar plate on the middle stacking position.

Preferably, when the second built-up shaft takes the membrane electrode plate from the membrane electrode plate centering table, the third built-up shaft discharges the bipolar plate on the middle stacking position; and when the second built-up shaft discharges the membrane electrode plate on the middle stacking position, the third built-up shaft takes the bipolar plate from the bipolar plate centering table.

Preferably, each built-up shaft is composed of a horizontal movement shaft and a vertical movement shaft, wherein the horizontal movement shaft is mounted on a roller way of the same gantry, and configured to horizontally carry the membrane electrode plate and the bipolar plate, and the horizontal movement shafts of the four built-up shafts are separately controlled; and the vertical movement shaft has a suction cup assembly, only makes short-stroke up-and-down movement and completes actions of picking up and placing the membrane electrode plate or the bipolar plate through the suction cup assembly.

Preferably, the membrane electrode plate centering table and the bipolar plate centering table are the same in structure and function and each include a centering table bracket, the centering table bracket is provided with a motor-driven platform, the motor-driven platform is able to rotate a platform upper end plate front and back, right and left, and at an angle, and a ceramic suction cup and the platform upper end plate are mounted into a whole; and after the membrane electrode plate or the bipolar plate is put onto a plane of the ceramic suction cup, a vacuum generator starts to work, the ceramic suction cup fixes the bipolar plate or the membrane electrode plate through negative pressure adsorption force, at this time, position detection cameras start to work to take pictures, a product position deviation is calculated based on obtained images and then transmitted to the motor-driven platform, and the motor-driven platform moves the platform upper end plate to a preset position based on the product position deviation, so as to make the membrane electrode plate or the bipolar plate move to a correct position.

Preferably, the membrane electrode plate centering table and the bipolar plate centering table each further include a product thickness measurement sensor, configured to measure a product thickness of the membrane electrode plate or the bipolar plate on the ceramic suction cup to confirm that there is only one membrane electrode plate or bipolar plate.

Preferably, the membrane electrode plate centering table and the bipolar plate centering table each further include a two-dimensional code scanner, configured to scan a two-dimensional code on the membrane electrode plate or the bipolar plate on the ceramic suction cup to ensure that the membrane electrode plate or the bipolar plate is of a correct category.

Preferably, the high-speed stacking device for assembling the flat parts of the electrical device further includes a camera configured to detect whether a position of the membrane electrode plate or the bipolar plate placed at the stacking position meets a preset accuracy requirement and a product category, wherein if the product category is not correct or the position deviation is too large, the gantry four-built-up shaft carrying mechanism carries the membrane electrode plate or the bipolar plate at the stacking position to a waste bin.

Preferably, the membrane electrode plate feeding bin and the bipolar plate feeding bin are the same in structure and function, and each include two feeding channels, and each feeding channel independently moves; and when one of the feeding channels works in the high-speed mixed stacking device, the other feeding channel is individually pulled out to complete manual replenishment.

Preferably, the membrane electrode plate feeding bin and the bipolar plate feeding bin are mounted on feeding mechanism brackets, and each include bin base plates mounted on the feeding mechanism bracket, a plurality of bins are mounted on the bin base plates, the two bin base plates are fixed to the feeding mechanism bracket by means of respective slide rails so as to form the two feeding channels on left and right respectively, and each feeding channel is controlled to move by an independent rodless cylinder; and
the membrane electrode plate feeding lifting mechanism or the bipolar plate feeding lifting mechanism is located below the bin base plates, the two channels share one set of membrane electrode plate feeding lifting mechanism or one set of bipolar plate feeding lifting mechanism, the membrane electrode plate feeding lifting mechanism or the bipolar plate feeding lifting mechanism includes a feeding lifting mechanism sliding table, the feeding lifting mechanism sliding table is provided with a vertical servo module, and the servo module drives the feeding lifting mechanism sliding table to lift the membrane electrode plate or the bipolar plate in the bins to a needed height; and the feeding lifting mechanism sliding table is arranged on a feeding lifting mechanism base and is capable of sliding left and right on the feeding lifting mechanism base, so as to switch a lifting position between the two different channels.

Preferably, each suction cup assembly includes a ceramic suction cup, and a whole surface of the ceramic suction cup adsorbs the membrane electrode plate or the bipolar plate; the ceramic suction cup and a suction cup upper plate are directly connected by four vertical shafts, and the vertical shafts are capable of sliding up and down on the suction cup upper plate, a spring is provided between the ceramic suction cup and the suction cup upper plate, and the spring is compressed when the ceramic suction cup is subjected to pressure, to make the ceramic suction cup capable of slightly floating upwards; the suction cup upper plate is fixedly connected to the corresponding built-up shaft by a suction cup fixing bracket; and a vacuum generator provides a suction force for the ceramic suction cup to provide the ceramic suction cup with a capacity of picking up and placing a product.

When the device provided by the present invention is adopted for stacking, incoming products first pass through product centering mechanisms to achieve accurate feeding positions, and then are carried to a stacking position to ensure the feeding accuracy. The gantry four-built-up shaft carrying mechanism above the device provided by the present invention cooperates with the feeding lifting mechanisms and the stacked sheet lifting mechanism below the device to work up and down to ensure the stacking speed. The present invention is able to meet the requirement of accurate and fast crossed stacking of membrane electrode plates and bipolar plates in the production process of automobile hydrogen energy fuel cells.

### Brief Description of the Drawings

Fig. 1 is a three-dimensional schematic diagram of an overall structure of a stacking device;
Fig. 2 is a front view of a stacking device;
Fig. 3 is a three-dimensional schematic diagram of a centering table of a stacking device;
Fig. 4 is a three-dimensional schematic diagram of a feeding mechanism;
Fig. 5 is a sectional diagram of a stacked sheet lifting mechanism;
Fig. 6 is a structural diagram of a suction cup assembly; and
Fig. 7 is a schematic diagram of driving of a lifting rod of a stacked sheet lifting mechanism.

### Detailed Description

The present invention is further described below in combination with specific embodiments. It should be understood that these embodiments are only intended to illustrate the present invention and not to limit the scope of the present invention. In addition, it should also be understood that after reading what is taught herein, those skilled in the art may make various alterations or modifications to the present invention, and these equivalent forms likewise fall within the scope limited by the claims appended to the present application.

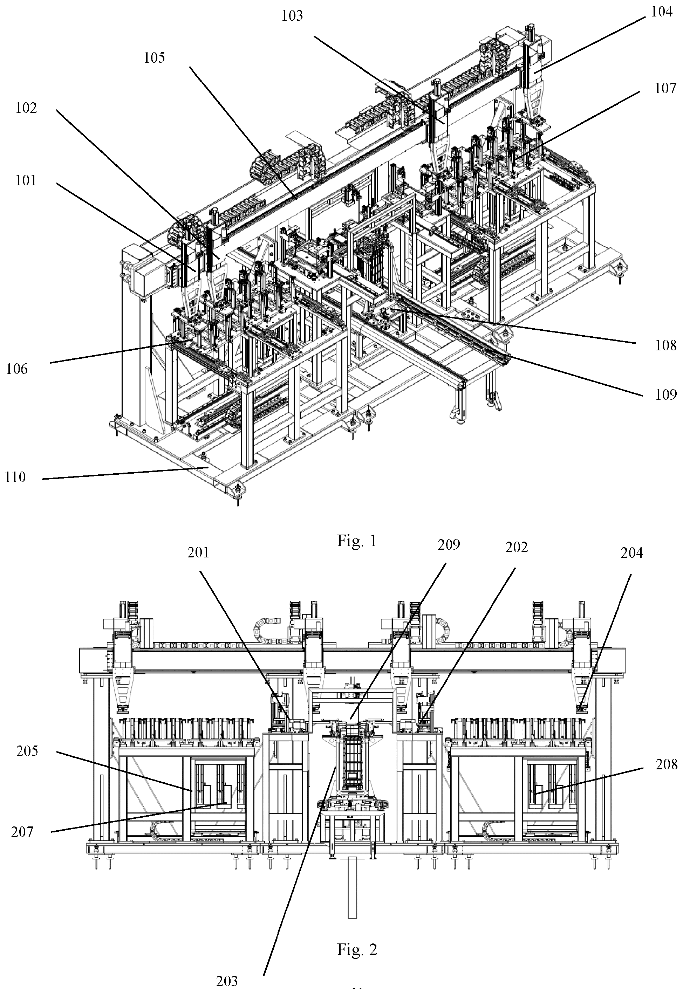

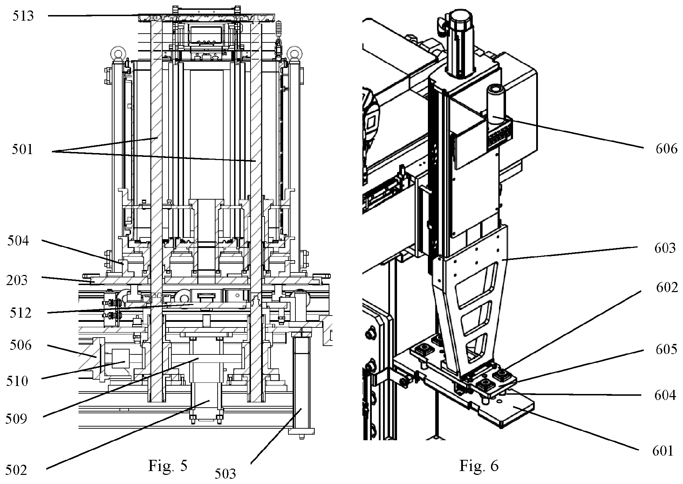

In combination with Fig. 1 and Fig. 2, the present embodiment discloses a device for assembling and alternately stacking bipolar plates and membrane electrode plates of fuel cells. The device includes a device base 110, and a gantry four-built-up shaft carrying mechanism is mounted on the device base 110. The gantry four-built-up shaft carrying mechanism includes a gantry 105, four built-up shafts are arranged on the gantry 105 and are defined as a first built-up shaft 101, a second built-up shaft 102, a third built-up shaft 103 and a fourth built-up shaft 104 respectively, and each built-up shaft is provided with a suction cup assembly 204 (the structure is as shown in Fig. 6, as detailed below). A membrane electrode plate centering table 201, a bipolar plate centering table 202, a membrane electrode plate feeding bin 106, a membrane electrode plate feeding lifting mechanism 205, a bipolar plate feeding bin 107, a bipolar plate feeding lifting mechanism 208, a stacked sheet lifting mechanism 108 and a roller way 109 which are fixed on the device base 110 are arranged below the four built-up shafts. The membrane electrode plate centering table 201, the bipolar plate centering table 202, the membrane electrode plate feeding bin 106, the membrane electrode plate feeding lifting mechanism 205, the bipolar plate feeding bin 107, the bipolar plate feeding lifting mechanism 208, and the stacked sheet lifting mechanism 108 are horizontally arranged below the gantry 105, jointly forming the whole device to work.

Before the device works, a membrane electrode plate is manually fed into the membrane electrode plate feeding bin 106, and a bipolar plate is manually fed into the bipolar plate feeding bin 107. A tray 203 with a fuel cell housing is conveyed by the automatic roller way 109 to the stacked sheet lifting mechanism 108 located at the center of the device. Then, the membrane electrode plate feeding lifting mechanism 205 lifts the membrane electrode plate in the membrane electrode plate feeding bin 106 to a needed height, the bipolar plate feeding lifting mechanism 208 lifts the bipolar plate in the bipolar plate feeding bin 107 to a needed height, and the stacked sheet lifting mechanism 108 lifts a floating end plate 505 in the fuel cell housing located at a stacking position 209 to an initial height. The gantry four-built-up shaft carrying mechanism starts to work: the first built-up shaft 101 carries the membrane electrode plate from the membrane electrode plate feeding bin 106 to the membrane electrode plate centering table 201, and after the membrane electrode plate is adjusted to a standard position by the membrane electrode plate centering table 201, the second built-up shaft 102 carries the membrane electrode plate from the membrane electrode plate centering table 201 to the stacking position 209. The fourth built-up shaft 104 carries the bipolar plate from the bipolar plate feeding bin 107 to the bipolar plate centering table 202, and after the bipolar plate is adjusted to a standard position by the bipolar plate centering table 202, the third built-up shaft 103 carries the bipolar plate from the bipolar plate centering table 202 to the stacking position 209. It works in this way in a reciprocating cycle. The height of the membrane electrode plate or the bipolar plate located at a feeding position is always maintained constant by the membrane electrode plate feeding lifting mechanism 205 and the bipolar plate feeding lifting mechanism 208. The height of a product located at the stacking position 209 is always maintained constant by the stacked sheet lifting mechanism 108. The heights of the membrane electrode plate centering table 201 and the bipolar plate centering table 202 are exactly the same as the heights of product picking-up and placing positions.

Each built-up shaft is composed of a horizontal movement shaft and a vertical movement shaft, wherein the four horizontal shafts are mainly configured to horizontally carry the membrane electrode plate and the bipolar plate, and the four vertical shafts only makes short-stroke lifting, so as to ensure the stacking speed. The four horizontal shafts of the four built-up shafts are mounted on a roller way of the same gantry, and a magnetic drive linear motor is preferably used to achieve a higher speed, or gears and racks may also be used at a better cost. The horizontal movement of the four horizontal shafts should be controlled separately to achieve linkage without collision. Each vertical shaft of the four built-up shafts has a set of suction cup assembly 204, only makes short-stroke up-and-down movement and completes actions of picking up and placing products through the suction cup assembly 204. In order to achieve stacking work of high speed and high efficiency, the four built-up shafts perform left-right crossed division work. The first built-up shaft 101 and the second built-up shaft 102 are on the left side. The first built-up shaft 101 takes the membrane electrode plate from the feeding position and discharges the membrane electrode plate on the membrane electrode plate centering table 201. The second built-up shaft 102 takes the membrane electrode plate from the membrane electrode plate centering table 201 and discharges the membrane electrode plate on the middle stacking position 209. The third built-up shaft 103 and the fourth built-up shaft 104 are on the right side. The fourth built-up shaft 104 takes the bipolar plate from the bipolar plate feeding position and discharges the bipolar plate on the bipolar plate centering table 202. The third built-up shaft 103 takes the bipolar plate from the bipolar plate centering table 202 and discharges the bipolar plate on the middle stacking position 209. The four built-up shafts perform left-right crossed division work, when the second built-up shaft 102 takes the membrane electrode plate from the membrane electrode plate centering table 201, the third built-up shaft 103 discharges the bipolar plate on the middle stacking position 209. On the contrary, when the second built-up shaft 102 discharges the membrane electrode plate on the middle stacking position 209, the third built-up shaft 103 takes the bipolar plate from the bipolar plate centering table 202, and through crossed work, no time is wasted. The height positions of the four built-up shafts for feeding and discharging the products are fixed, so the vertical shafts of the four built-up shafts only need to move up and down in short strokes to pick up and place the materials, which ensures the efficient transfer speed. At the feeding positions of the membrane electrode plate and the bipolar plate, every time when one piece of the membrane electrode plate or bipolar plate is taken away by the built-up shaft above, the bipolar plate feeding lifting mechanism 208 or the membrane electrode plate feeding lifting mechanism 205 located at the feeding position raises by a thickness of one piece of product, thereby ensuring that the height of picking up the materials at the feeding position is unchanged. At the middle stacking position 209, every time when one piece of product is placed, the stacked sheet lifting mechanism 108 decreases by the thickness of one piece of product, thereby ensuring that the height of the stacking position is always unchanged.

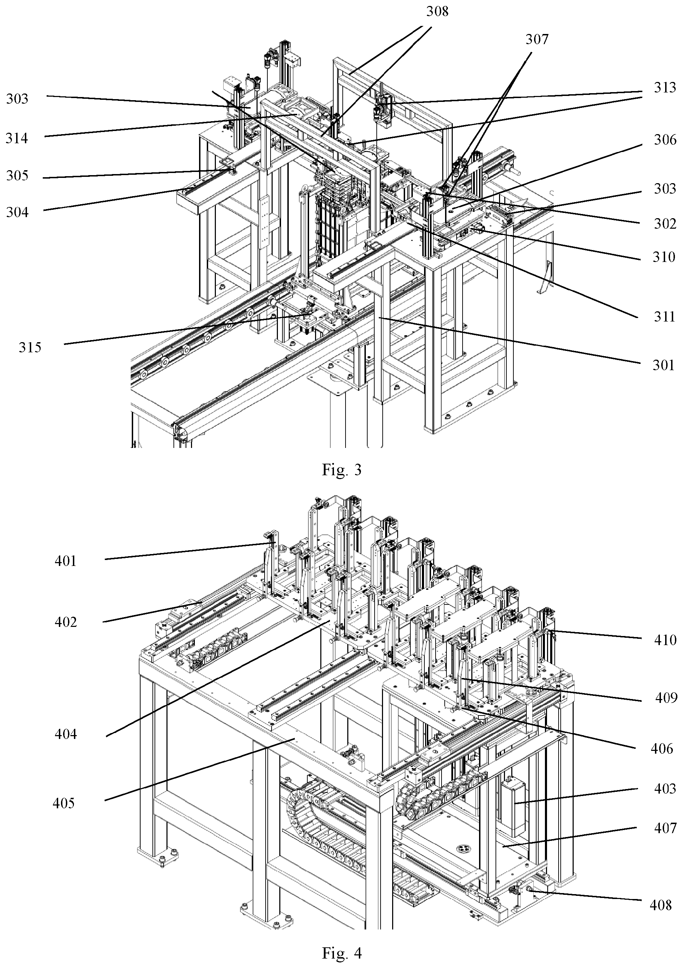

As shown in Fig. 3, the membrane electrode plate centering table 201 and the bipolar plate centering table 202 are the same in structure and function and each include a centering table bracket 301, the centering table bracket 301 is provided with a motor-driven platform 310, the motor-driven platform 310 is able to rotate a platform upper end plate front and back, right and left, and at an angle, with the cooperation of position detection cameras 307, a product position deviation amount can be recognized and calculated in a short period of time, the device then gives the position deviation amount to the motor-driven platform 310, and then the motor-driven platform 310 moves the platform upper end plate to the needed position. A ceramic suction cup 306 and the platform upper end plate are mounted into a whole; and after the membrane electrode plate or the bipolar plate is put onto a plane of the ceramic suction cup 306, a vacuum generator 303 starts to work, and the ceramic suction cup 306 fixes the bipolar plate or the membrane electrode plate through negative pressure adsorption force and prevents the bipolar plate or the membrane electrode plate from freely moving. At this time, the position detection cameras 307 start to work to take pictures, a product position deviation is calculated based on obtained images and then transmitted to the motor-driven platform 310, and the membrane electrode plate or the bipolar plate is moved to a correct position. At this time, a two-dimensional code scanner 302 scans a two-dimensional code on the membrane electrode plate or the bipolar plate to ensure that the membrane electrode plate or the bipolar plate is of a correct category. A product thickness measurement sensor 311 measures a product thickness of the membrane electrode plate or the bipolar plate to confirm that there is only one membrane electrode plate or bipolar plate. If it is confirmed that it is the required membrane electrode plate or bipolar plate, the gantry four-built-up shaft carrying mechanism carries the membrane electrode plate or the bipolar plate to the stacking position 209, and cameras 313 mounted on camera brackets 308 detect whether the position accuracy of the placed membrane electrode plate or bipolar plate is accurate. If the product category is not correct or the position deviation is too large, the gantry four-built-up shaft carrying mechanism carries the membrane electrode plate or the bipolar plate at the stacking position 209 to a waste bin 314. When the waste bin 314 is full of materials, a waste bin fixing pin 305 is unlocked manually first, the waste bin 314 is pulled out along a guide rail 304, and the waste materials are removed manually.

As shown in Fig. 4, the membrane electrode plate feeding lifting mechanism 205 and the bipolar plate feeding lifting mechanism 208 are the same in structure and function, and the membrane electrode plate feeding bin 106 and the bipolar plate feeding bin 107 are the same in structure and function. The membrane electrode plate feeding bin 106 or the bipolar plate feeding bin 107 is mounted on a feeding mechanism bracket 405, and includes bin base plates 404 mounted on the feeding mechanism bracket 405, a plurality of bins are mounted on the bin base plates 404, and each bin is composed of six bin guide stand columns 401, is internally made of Teflon, is wear-resisting and does not damage the membrane electrode plate and the bipolar plate. A stand column at an end plate can be rapidly taken down or mounted, a bin guide mechanism 409 close to a current operator can be rapidly dismounted and mounted only by manually unlocking a spring plug pin 406, and the bins are conveniently supplemented manually. The two bin base plates 404 are fixed to the feeding mechanism bracket 405 by means of respective slide rails respectively so as to form two feeding channels on left and right sides, and each feeding channel is controlled to move by an independent rodless cylinder 402. When one of the feeding channels works in the device, the other feeding channel is individually pulled out by the rodless cylinder 402 to complete manual replenishment. The objective is to make the time of manual replenishment not occupy the equipment takt time. A counter sensor is mounted above the membrane electrode plate feeding bin 106 or the bipolar plate feeding bin 107, which can detect the height of the product in real time, control the feeding lift, and ensure that the height of the product at the feeding position is stable.

The membrane electrode plate feeding lifting mechanism 205 or the bipolar plate feeding lifting mechanism 208 is located below the bin base plates 404, the two channels share one set of membrane electrode plate feeding lifting mechanism 205 or one set of bipolar plate feeding lifting mechanism 208, the membrane electrode plate feeding lifting mechanism 205 or the bipolar plate feeding lifting mechanism 208 includes a feeding lifting mechanism sliding table 407, the feeding lifting mechanism sliding table 407 is provided with a vertical servo module 403, the lifting height can be rapidly adjusted to be compatible with more types of products, and the servo module 403 drives the feeding lifting mechanism sliding table 407 to lift the membrane electrode plate or the bipolar plate in the bins to a needed height. The feeding lifting mechanism sliding table 407 is mounted on a feeding lifting mechanism base 408 and is capable of sliding left and right on the feeding lifting mechanism base 408, so as to switch a lifting position, thereby saving cost and achieving rapid switching.

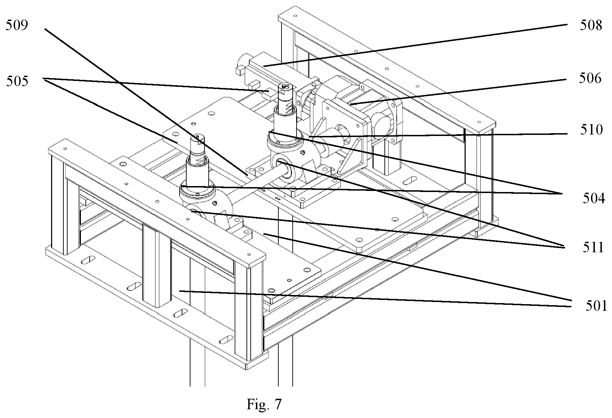

As shown in Fig. 5 and Fig. 7, the product tray 203 is arranged at a stacking station lifting mechanism bracket 503, and after the tray 203 is delivered to this position by the conveying roller way 109, an air cylinder 502 lifts the tray to disengage the tray from the roller way, to ensure the position positioning accuracy of the tray. Then gear rods 501 are lifted upwards under the drive of a motor 508 to lift the floating end plate 513 in the product to the needed height. The motor 508 drives a speed reducer 506, the speed reducer 506 and a shaft 509 are connected by a coupling 510, the shaft 509 drives two gearboxes 511 at the same time, and the two gearboxes 511 drive the gear rods 501 at the same time, so that the lifting and descending of the two gear rods 501 can be synchronized. Positioning sleeves 504 ensure the position accuracy of the gear rods 501, and the gear rods are provided with positioning pin sleeves 505, which can precisely position the floating end plate 513.

As shown in Fig. 6, in the present embodiment, a body of each suction cup assembly 204 is a ceramic suction cup 601, and the ceramic suction cup 601 is made of ceramic materials imitating the shape of the product. The ceramic has micropores with internal negative pressure, which can adsorb the membrane electrode plate or the bipolar plate. The ceramic suction cup 601 performs absorption on the whole surface, which can prevent the product from bending and causing damage to the product itself. The present invention adopts the ceramic, which is characterized by high hardness, wear resistance, and no oxidization and rust, and can well ensure the cleanliness of the product. A suction cup fixing bracket 603 fixes a suction cup upper plate 605 on the corresponding vertical shaft of the gantry four-built-up shaft carrying mechanism, the ceramic suction cup 601 and the suction cup upper plate 605 are directly connected by four vertical shafts 602, and the vertical shafts 602 are capable of sliding up and down on the suction cup upper plate 605, a spring is provided between the ceramic suction cup 601 and the suction cup upper plate 605, so that the spring 604 is compressed when the ceramic suction cup 601 is subjected to pressure, to make the ceramic suction cup 601 capable of slightly floating upwards, and pressure is prevented from being too large and crushing the product. A vacuum generator 606 may provide a suction force for the ceramic suction cup 601 to provide the ceramic suction cup 601 with a capacity of picking up and placing the product.

## Claims

1. A high-speed stacking device for assembling flat parts of an electrical device, **characterized by** comprising a gantry four-built-up shaft carrying mechanism, wherein the gantry four-built-up shaft carrying mechanism comprises a gantry and four built-up shafts arranged on the gantry, which are defined as a first built-up shaft, a second built-up shaft, a third built-up shaft and a fourth built-up shaft respectively; and
further comprising a membrane electrode plate centering table, a bipolar plate centering table, a membrane electrode plate feeding bin, a membrane electrode plate feeding lifting mechanism, a bipolar plate feeding bin, a bipolar plate feeding lifting mechanism, and a stacked sheet lifting mechanism which are horizontally arranged below the gantry, wherein the membrane electrode plate centering table, the membrane electrode plate feeding bin, and the membrane electrode plate feeding lifting mechanism are arranged symmetrically with the bipolar plate centering table, the bipolar plate feeding bin, and the bipolar plate feeding lifting mechanism on left and right sides of the stacked sheet lifting mechanism;
a tray with a fuel cell housing is conveyed by an automatic roller way to the stacked sheet lifting mechanism, a floating end plate in the fuel cell housing is lifted by the stacked sheet lifting mechanism to a stacking position, and heights of a membrane electrode plate and a bipolar plate stacked at the stacking position are maintained constant;
the membrane electrode plate and the bipolar plate are manually fed into the membrane electrode plate feeding bin and the bipolar plate feeding bin, the membrane electrode plate feeding lifting mechanism and the bipolar plate feeding lifting mechanism lift the membrane electrode plate in the membrane electrode plate feeding bin and the bipolar plate in the bipolar plate feeding bin to feeding positions respectively, and heights of the membrane electrode plate and the bipolar plate stacked at the feeding positions are maintained constant; and
the four built-up shafts of the gantry four-built-up shaft carrying mechanism perform left-right crossed division work: the first built-up shaft takes the membrane electrode plate from the feeding position and discharges the membrane electrode plate on the membrane electrode plate centering table, and after the membrane electrode plate is adjusted to a standard position by the membrane electrode plate centering table, the second built-up shaft takes the membrane electrode plate from the membrane electrode plate centering table and discharges the membrane electrode plate on the middle stacking position; and the fourth built-up shaft takes the bipolar plate from the feeding position and discharges the bipolar plate on the bipolar plate centering table, and after the bipolar plate is adjusted to a standard position by the bipolar plate centering table, the third built-up shaft takes the bipolar plate from the bipolar plate centering table and discharges the bipolar plate on the middle stacking position.

2. The high-speed stacking device for assembling the flat parts of the electrical device according to claim 1, wherein when the second built-up shaft takes the membrane electrode plate from the membrane electrode plate centering table, the third built-up shaft discharges the bipolar plate on the middle stacking position; and when the second built-up shaft discharges the membrane electrode plate on the middle stacking position, the third built-up shaft takes the bipolar plate from the bipolar plate centering table.

3. The high-speed stacking device for assembling the flat parts of the electrical device according to claim 1, wherein each built-up shaft is composed of a horizontal movement shaft and a vertical movement shaft, wherein the horizontal movement shaft is mounted on a roller way of the same gantry, and configured to horizontally carry the membrane electrode plate and the bipolar plate, and the horizontal movement shafts of the four built-up shafts are separately controlled; and the vertical movement shaft has a suction cup assembly, only makes short-stroke up-and-down movement and completes actions of picking up and placing the membrane electrode plate or the bipolar plate through the suction cup assembly.

4. The high-speed stacking device for assembling the flat parts of the electrical device according to claim 1, wherein the membrane electrode plate centering table and the bipolar plate centering table are the same in structure and function and each comprise a centering table bracket, the centering table bracket is provided with a motor-driven platform, the motor-driven platform is able to rotate a platform upper end plate front and back, right and left, and at an angle, and a ceramic suction cup and the platform upper end plate are mounted into a whole; and after the membrane electrode plate or the bipolar plate is put onto a plane of the ceramic suction cup, a vacuum generator starts to work, the ceramic suction cup fixes the bipolar plate or the membrane electrode plate through negative pressure adsorption force, at this time, position detection cameras start to work to take pictures, a product position deviation is calculated based on obtained images and then transmitted to the motor-driven platform, and the motor-driven platform moves the platform upper end plate to a preset position based on the product position deviation, so as to make the membrane electrode plate or the bipolar plate move to a correct position.

5. The high-speed stacking device for assembling the flat parts of the electrical device according to claim 4, wherein the membrane electrode plate centering table and the bipolar plate centering table each further comprise a product thickness measurement sensor, configured to measure a product thickness of the membrane electrode plate or the bipolar plate on the ceramic suction cup to confirm that there is only one membrane electrode plate or bipolar plate.

6. The high-speed stacking device for assembling the flat parts of the electrical device according to claim 4, wherein the membrane electrode plate centering table and the bipolar plate centering table each further comprise a two-dimensional code scanner, configured to scan a two-dimensional code on the membrane electrode plate or the bipolar plate on the ceramic suction cup to ensure that the membrane electrode plate or the bipolar plate is of a correct category.

7. The high-speed stacking device for assembling the flat parts of the electrical device according to claim 1, further comprising a camera configured to detect whether a position of the membrane electrode plate or the bipolar plate placed at the stacking position meets a preset accuracy requirement and a product category, wherein if the product category is not correct or a position deviation is too large, the gantry four-built-up shaft carrying mechanism carries the membrane electrode plate or the bipolar plate at the stacking position to a waste bin.

8. The high-speed stacking device for assembling the flat parts of the electrical device according to claim 1, wherein the membrane electrode plate feeding bin and the bipolar plate feeding bin are the same in structure and function, and each comprise two feeding channels, and each feeding channel independently moves; and when one of the feeding channels works in the high-speed mixed stacking device, the other feeding channel is individually pulled out to complete manual replenishment.

9. The high-speed stacking device for assembling the flat parts of the electrical device according to claim 8, wherein the membrane electrode plate feeding bin and the bipolar plate feeding bin are mounted on feeding mechanism brackets, and each comprise bin base plates mounted on the feeding mechanism bracket, a plurality of bins are mounted on the bin base plates, the two bin base plates are respectively fixed to the feeding mechanism bracket by means of respective slide rails so as to form the two feeding channels on left and right, and each feeding channel is controlled to move by an independent rodless cylinder; and
the membrane electrode plate feeding lifting mechanism or the bipolar plate feeding lifting mechanism is located below the bin base plates, the two channels share one set of membrane electrode plate feeding lifting mechanism or one set of bipolar plate feeding lifting mechanism, the membrane electrode plate feeding lifting mechanism or the bipolar plate feeding lifting mechanism comprises a feeding lifting mechanism sliding table, the feeding lifting mechanism sliding table is provided with a vertical servo module, and the servo module drives the feeding lifting mechanism sliding table to lift the membrane electrode plate or the bipolar plate in the bins to a needed height; and the feeding lifting mechanism sliding table is arranged on a feeding lifting mechanism base and is capable of sliding left and right on the feeding lifting mechanism base, so as to switch a lifting position between the two different channels.

10. The high-speed stacking device for assembling the flat parts of the electrical device according to claim 1, wherein each suction cup assembly comprises a ceramic suction cup, and a whole surface of the ceramic suction cup adsorbs the membrane electrode plate or the bipolar plate; the ceramic suction cup and a suction cup upper plate are directly connected by four vertical shafts, and the vertical shafts are capable of sliding up and down on the suction cup upper plate, a spring is provided between the ceramic suction cup and the suction cup upper plate, and the spring is compressed when the ceramic suction cup is subjected to pressure, to make the ceramic suction cup capable of slightly floating upwards; the suction cup upper plate is fixedly connected to the corresponding built-up shaft by a suction cup fixing bracket; and a vacuum generator provides a suction force for the ceramic suction cup to provide the ceramic suction cup with a capacity of picking up and placing a product.
